# EUROPEAN PATENT APPLICATION

(11) **EP 4 046 475 A1**
(43) Date of publication of application: **24.08.2022**
(21) Application number: 22157330.6
(22) Date of filing: 17.02.2022
(51) Int. Cl.: A01G 7/04

(54) **METHODS AND SYSTEMS FOR CONTROLLING HORTICULTURAL LIGHT**

(30) Priority: 17.02.2021 US 202163150438 P
(71) Applicant: Sollum Technologies Inc., Montreal, QC H2Y 2R6 (CA)
(72) Inventor: POIRIER, Jacques, MONTREAL (QUEBEC), H2Y 2R6 (CA); DUPRAS, Gabriel, MONTREAL (QUEBEC), H2Y 2R6 (CA); TREMBLAY, Kassim, MONTREAL (QUEBEC), H2Y 2R6 (CA); SMITH, Charles, MONTREAL (QUEBEC), H2Y 2R6 (CA); ROY-MOISAN, Francois, MONTREAL (QUEBEC), H2Y 2R6 (CA); BRUN, Louis, MONTREAL (QUEBEC), H2Y 2R6 (CA); MENARD, Patrick, MONTREAL (QUEBEC), H2Y 2R6 (CA); TREMBLAY, Marc, MONTREAL (QUEBEC), H2Y 2R6 (CA); TOURVILLE, Guillaume, MONTREAL (QUEBEC), H2Y 2R6 (CA); ARSENEAULT, Leandre, MONTREAL (QUEBEC), H2Y 2R6 (CA)
(74) Representative: EP&C

(57) **Abstract**

There are provided techniques for controlling horticultural light illuminating a crop or plant. There is provided a method that includes tracking integral indicators and/or external information representative of a growth parameter of the crop or plant, and adjusting the horticultural light based on the integral indicators and/or external information. There is also provided a system including a recipe module, a tracking module configured to track integral indicators, and a feedback loop configured to feed ongoing integral indicators to the recipe module, and, in response thereto, alter illumination instructions, thereby adjusting the lighting scenario to be transmitted to a horticultural lighting apparatus.

## Description

### TECHNICAL FIELD

The technical field generally relates to lighting, and more particularly concerns methods and systems for controlling horticultural light illuminating a crop or plant.

### BACKGROUND

Artificial light sources may be used in horticulture or agriculture to assist or promote the growth of plants or crops. However, it remains a challenge to adequately determine the lighting requirements of a growing plant or crop, as the lighting requirements of the plants or crops may evolve during their growing process. For example, the lighting requirements of a given plant or crop may change over a relatively short period (*e.g*., hour(s) or portion(s) of the day, depending on the plant or crop) and evolve during its whole growing process (*e.g*., day(s), week(s), or month(s), depending on the plant or crop). In these circumstances, it remains challenging to provide appropriate illumination to the plant or crop.

There remains a need for a method or system that can provide improvements in methods and systems for controlling horticultural light.

### SUMMARY

The present techniques generally concern methods and systems for controlling horticultural light illuminating a crop or plant, and more specifically relate to tracking integral indicators and/or external information representative of a growth parameter of the crop or plant, and then adjusting the horticultural light based on the integral indicators and/or external information.

In accordance with one aspect, there is provided a method for controlling horticultural light illuminating a crop or plant. The method includes receiving inputs with a recipe module, the inputs being representative of a lighting scenario to be transmitted to a horticultural lighting apparatus and/or growth parameters of the crop or plant. The method includes controlling the horticultural lighting apparatus according to the lighting scenario from the recipe module. The step of controlling the horticultural lighting apparatus may include sending illumination instructions from the recipe module towards the horticultural lighting apparatus. The method includes tracking integral indicators with a tracking module and adjusting the lighting scenario being sent to the horticultural lighting apparatus, based on the integral indicators and/or growth parameters of the crop or plant, thereby adjusting the horticultural light illuminating the crop or plant.

In some embodiments, the integral indicators are based on theoretical data, empirical data, or a combination thereof.

In some embodiments, the integral indicators include data representative of at least one of: an integral associated with a photosynthetic photon flux, an integral associated with a photosynthetic photon flux density, an integral associated with a correlated color temperature, an integral associated with a relative intensity for each wavelength, an integral associated with a power consumption for each wavelength, an integral associated with a relative intensity for each light-emitting diode, an integral associated with a power consumption for each light-emitting diode and an integral associated with a global power consumption integral.

In some embodiments, the method further includes tracking external information, said adjusting the horticultural light being further based on said external information.

In some embodiments, said external information includes at least one of: weather information, power consumption information and grid rate schedule.

In some embodiments, said growth parameters includes at least one of: absolute growth rate, relative growth rate, dimensions of at least a portion of the crops or plants.

In some embodiments, adjusting the lighting scenario transmitted to the horticultural lighting apparatus includes adjusting parameters controlling the horticultural lighting apparatus.

In some embodiments, the horticultural light apparatus includes a plurality of light-emitting diodes, and wherein said adjusting the lighting scenario transmitted to the horticultural lighting apparatus includes adjusting parameters controlling said plurality of light-emitting diodes.

In some embodiments, the method further includes outputting a visual representation of the lighting scenario, past integral indicators, present integral indicators and/or predicted integral indicators.

In some embodiments, said tracking the integral indicators includes obtaining a plurality of successive instantaneous indicators.

In some embodiments, said obtaining the plurality of successive instantaneous indicators includes measuring the instantaneous indicators.

In some embodiments, said obtaining the plurality of successive instantaneous indicators includes estimating the instantaneous indicators.

In some embodiments, said tracking integral indicators is carried out in real time or near real time.

In some embodiments, the method further includes detecting one or more signals representative of a horticultural environment.

In accordance with another aspect, there is provided a system for controlling horticultural light illuminating a crop or plant. The system includes a recipe module configured to receive inputs, the inputs being representative of a lighting scenario to be transmitted to a horticultural lighting apparatus and/or growth parameters of the crop or plant. The system includes a tracking module configured to track integral indicators. The tracking module is operatively connected to the recipe module and receives therefrom illumination instructions. The system includes a feedback loop operatively connected to the tracking module and the recipe module. The feedback loop is configured to feed ongoing integral indicators to the recipe module, and, in response thereto, adjust or alter the illumination instructions and thereby adjust the horticultural light illuminating the crop or plant.

In some embodiments, at least one of: the recipe module, the tracking module and the feedback loop is integrated to the horticultural light source.

In some embodiments, the recipe module includes a data storage device for storing a plurality of lighting scenarios.

In some embodiments, the tracking module includes a data storage device for storing past integral indicators, present integral indicators and/or predicted integral indicators.

In some embodiments, the recipe module includes a visualization module for visualizing a representation of the lighting scenario; and/or visualizing a representation of the past integral indicators, the present integral indicators and/or the predicted integral indicators.

In some embodiments, the horticultural lighting apparatus includes a plurality of light-emitting diodes.

In some embodiments, the method or system may be integrated to the horticultural light source. In some embodiments, the recipe module, the tracking module and the feedback loop are mounted and integrated to the horticultural light source, such that the recipe module, the tracking module and the feedback loop are parts or components of the horticultural light source. In some embodiments, only one of the recipe module, the tracking module and the feedback loop is mounted to the horticultural light source. In some embodiments, two of the recipe module, the tracking module and the feedback loop are mounted to the horticultural lamp.

In accordance with another aspect, there is provided a non-transitory computer readable storage medium having stored thereon computer executable instructions that, when executed by a processor, cause the processor to perform the method herein disclosed, or at least one step of the method.

In accordance with another aspect, there are provided techniques providing a computer-implemented framework for operating and controlling horticultural lighting apparatuses, based on a plurality of theoretical and/or empirical data. In some embodiments, the computer-implemented framework may be modular and may include a plurality of interchangeable modules. Each module may be associated with at least one functionality, such that the different modules may be combined, assembled or integrated to collectively achieve the functionalities of the systems and methods being herein described. In these embodiments, each module may be provided as a plug-in. In some embodiments a portion or an entirety of the computer-implemented framework may be run or executed by the horticultural light source or lamp. In some embodiments, the horticultural light source may include a controller or a processor, and the present techniques may be implemented or executed by the controller or processor provided with the horticultural light source or lamp.

Other features and advantages of the method and system described herein will be better understood upon a reading of preferred embodiments thereof with reference to the appended drawings. Although specific features described in the above summary and in the detailed description below may be described with respect to specific embodiments or aspects, it should be noted that these specific features can be combined with one another unless stated otherwise.

### BRIEF DESCRIPTION OF THE DRAWINGS

Figure 1 shows an embodiment of a system for controlling horticultural light illuminating a crop or plant.
Figure 2 illustrates an example of an integral indicator being tracked by the system of Figure 1.
Figure 3 illustrates an embodiment of the present techniques involving a preprogrammed lighting scenario.
Figure 4 illustrates an embodiment of the present techniques involving a generated lighting scenario.
Figure 5 shows an embodiment of a recipe module configured for editing lighting scenarios transmitted to a horticultural lighting apparatus.
Figure 6 is a flowchart presenting how a tracking module tracks the integral indicators, in accordance with one embodiment.
Figure 7 presents an example of a tracking process, in accordance with one embodiment.
Figure 8 shows a method for controlling horticultural light illuminating a crop or plant.
Figure 9 shows a schematic representation of the system for controlling horticultural light.
Figure 10 shows a visual representation of techniques for controlling relative intensity of several light-emitting diodes included in a horticultural light source, in accordance with one embodiment.
Figure 11 shows a representation of the address space, in accordance with one embodiment.
Figure 12 is a representation of the lighting internal states, in accordance with one embodiment.
Figure 13 shows a device label module, in accordance with one embodiment.
Figure 14 is a visual representation of modules and/or components that may be collectively operated to define a recipe, in accordance with one embodiment.
Figure 15 illustrates a spectrum selection module and a spectral blend module, in accordance with one embodiment.
Figure 16 shows an implementation of a visual representation of a scenario module and a recipe module.
Figure 17 illustrates a fader module configured to alter, modify or adjust the instantaneous output spectrum of the system, in accordance with one embodiment.

### DETAILED DESCRIPTION

In the present description, similar features in the drawings have been given similar reference numerals. To avoid cluttering certain figures, some elements may not have been indicated if they were already identified in a preceding figure. It should also be understood that the elements of the drawings are not necessarily depicted to scale, since emphasis is placed on clearly illustrating the elements and structures of the present embodiments. Furthermore, positional descriptors indicating the location and/or orientation of one element with respect to another element are used herein for ease and clarity of description. Unless otherwise indicated, these positional descriptors should be taken in the context of the figures and should not be considered limiting. More particularly, it will be understood that such spatially relative terms are intended to encompass different orientations in the use or operation of the present embodiments, in addition to the orientations exemplified in the figures.

The terms "a", "an" and "one" are defined herein to mean "at least one", that is, these terms do not exclude a plural number of items, unless stated otherwise.

Terms such as "substantially", "generally" and "about", that modify a value, condition or characteristic of a feature of an exemplary embodiment, should be understood to mean that the value, condition or characteristic is defined within tolerances that are acceptable for the proper operation of this exemplary embodiment for its intended application.

Unless stated otherwise, the terms "connected" and "coupled", and derivatives and variants thereof, refer herein to any structural or functional connection or coupling, either direct or indirect, between two or more elements. For example, the connection or coupling between the elements may be acoustical, mechanical, optical, electrical, thermal, logical, or any combinations thereof.

The terms "match", "matching" and "matched" are intended to refer herein to a condition in which two elements are either the same or within some predetermined tolerance of each other. That is, these terms are meant to encompass not only "exactly" or "identically" matching the two elements but also "substantially", "approximately" or "subjectively" matching the two elements, as well as providing a higher or best match among a plurality of matching possibilities.

In the present description, the expression "based on" is intended to mean "based at least partly on", that is, this expression can mean "based solely on" or "based partially on", and so should not be interpreted in a limited manner. More particularly, the expression "based on" could also be understood as meaning "depending on", "representative of, "indicative of, "associated with" or similar expressions.

The term "computer" (or "computing device") is used to encompass computers, servers and/or specialized electronic devices which receive, process and/or transmit data. Computers are generally part of "systems" and include processing means, such as microcontrollers and/or microprocessors, CPUs or are implemented on FPGAs, as examples only. The processing means are used in combination with storage medium, also referred to as "memory" or "storage means". Storage medium can store instructions, algorithms, rules and/or data to be processed. Storage medium encompasses volatile or non-volatile/persistent memory, such as registers, cache, RAM, flash memory, ROM, as examples only. The type of memory is, of course, chosen according to the desired use, whether it should retain instructions, or temporarily store, retain or update data.

One skilled in the art will therefore understand that each such computer typically includes a processor (or multiple processors) that executes program instructions stored in the memory or other non-transitory computer-readable storage medium or device (e.g., solid state storage devices, disk drives, etc.). The various functions, modules, services, units or the like disclosed hereinbelow can be embodied in such program instructions, and/or can be implemented in application-specific circuitry (e.g., ASICs or FPGAs) of the computers. Where a computer system includes multiple computers these devices can, but need not, be co-located. In some embodiments, a computer system can be a cloud-based computing system whose processing resources are shared by multiple distinct business entities or other users.

It should be noted that, in the context of the current disclosure, the expression "plants or crops" may encompass a broad variety of multicellular organisms, including photosynthetic eukaryotes. Non limitative examples of plants or crops are seedlings, ornamental crops, ornamental plants, plugs, liners, fruits, small fruits, vegetables, leafy greens, herbs, young plants, high-value crops, and many others. The plants or crops may be produced for human food, non-human food or nonfood applications. The growing process of the plants or crops generally includes a plurality of subsequent plant growth stages, such as, for example, seed germination (or "sprout"), seedling, vegetative, bud stage (or "budding"), flowering and ripening. It should be understood that, in the present description, the plants or crops can be at any one of the plant growth stages or at a transition between any two subsequent growth stages.

The expression "horticultural light", synonyms and derivatives thereof will be used throughout the present disclosure, and refers to the use of optical techniques, systems, and methods for assisting, maintaining, stimulating and/or optimizing plants or crops growth. The horticultural light may irradiate or illuminate the plants or crops during any one of the plant growth stages. The horticultural light, which is the light generated by the horticultural lighting apparatus, may be produced or generated using an artificial light source or similar devices, apparatuses, and systems. Non-limiting examples of artificial light sources include incandescent light sources, fluorescent light sources, high-intensity discharge (HID) light sources such as mercury vapor, metal halide (MH), high-pressure sodium (HPS) and lowpressure sodium (LPS) light sources, solid-state light sources including LED light sources, and laser sources. The horticultural light is associated with an illumination spectrum or profile. In some implementations, the horticultural light produced by the horticultural lighting apparatus have a profile substantially similar to light reaching the crop or plant. The expression "illumination spectrum" is used to broadly refer to the spectral power distribution of an illumination. The illumination spectrum can represent the distribution of power radiated per unit area and per unit wavelength or frequency over a spectral region of the electromagnetic spectrum. It should be noted that using horticultural light may be used to irradiate or illuminate plants or crops growing in a horticultural structure providing regulated climatic conditions to the plants or crops. Nonlimitative examples of horticultural structures include greenhouse, glasshouse and hothouse.

In the present description, the terms "light" and "optical", and variants and derivatives thereof, are used to refer to radiation in any appropriate region of the electromagnetic spectrum. The terms "light" and "optical" are therefore not limited to visible light, but can also include, without being limited to, the infrared and ultraviolet regions. For example, in some implementations, the present techniques can be used with electromagnetic signals having wavelengths ranging from about 250 nm to about 2500 nm. However, this range is provided for illustrative purposes only and some implementations of the present techniques may operate outside this range. Also, the skilled person will appreciate that the definition of the ultraviolet, visible and infrared ranges in terms of spectral ranges, as well as the dividing lines between them, can vary depending on the technical field or the definitions under consideration, and are not meant to limit the scope of applications of the present techniques.

The expressions "natural light" or "natural light conditions" generally refer to light having spectral characteristics corresponding or similar to those of sunlight, moonlight or starlight. The spectral profile of natural light, particularly sunlight, varies as a function of geographic location, time of day, time of year, weather, cloud coverage, and several other factors. Several standards are known in the art to provide a spectral reference for natural light. For example, the Commission internationale de I'eclairage (CIE) has established the D series of well-defined daylight standard illuminants representing natural light under different conditions. One well-known standard is CIE Standard Illuminant D65, which is a daylight illuminant that intends to represent the average midday light in Western or Northern Europe. Other examples of CIE Standard Illuminants for daylight include the D50, D55, and D75 standard illuminants. Sunlight, which refers to the total spectrum of electromagnetic radiation emitted by the Sun and reaching the Earth, has a broad spectral range including ultraviolet radiation, visible light, and infrared radiation. Accordingly, standard illuminants extend within the solar radiation spectrum. For example, Standard Illuminant D65 extends from 300 nm to 830 nm. Non-limiting examples of natural light sources include sunlight, moonlight, starlight, twilight, lightning, and firelight.

In the present description, the term "solid-state light emitter" refers to any light-emitting device that converts electrical energy into electromagnetic radiation through the recombination of electronic carriers (*i.e*., electrons and holes) in a light emitting layer or region. The emitting layer or region can include, but is not limited to, silicon, silicon carbide, gallium nitride and/or other semiconductor materials, and may or may not include a substrate such as sapphire, silicon, silicon carbide and/or other microelectronic substrates. The solid-state light emitters can include both inorganic and organic light emitters, many of which are known to the skilled person and need not be described in detail herein. Non-limiting examples of types of solid-state light emitters include semiconductor light-emitting diodes (LEDs), semiconductor laser diodes, vertical cavity surface emitting lasers (VCSELs), other semiconductor light emitting devices or lamps, organic light-emitting diodes (OLEDs), and polymer light-emitting diode (PLEDs).

The expression "lighting scenario" is understood to refer to the generation of light, such as for illuminating purposes, according to predetermined optical characteristics (*e.g*., spectral content, intensity, polarization) that vary or evolve over time during a given time period. The optical characteristics of the generated light may correspond to or emulate those of natural lighting conditions. The natural light may emulate or be inspired from the actual light conditions experienced at a specific geographical location, date and time. It is appreciated that devising lighting scenarios that combine natural light conditions corresponding to different geographical locations is possible in some applications (*e.g*., a scenario could be build using sunrise, midday and sunset conditions corresponding to three distinct locations on Earth, at the same or different dates). In other embodiments, however, the natural light conditions may be different from real life conditions on Earth. By way of example, the spectrum of natural light generated according to the method described herein may differ from an actual spectral content of sunlight due to the absence of spectral components which are undesired or unnecessary in a given application context, or conversely by the enhancement or addition of wavelengths then are considered advantageous or required. The present techniques may rely on the use of solid-state light emitters. The solid-state light emitters can be driven to produce the lighting scenario using sets of control parameters. It should be noted that a plurality of lighting scenarios may be combined to collectively determine a "recipe" or a "recipe bundle". The recipe or the recipe bundle refers to a sequence of lighting scenarios.

In some embodiments, the lighting scenario may emulate lighting conditions over the course of a day, from dawn to dusk, or over a portion of a day. Indeed, the spectral contents of light reaching a particular location on earth from the Sun is not constant as the day progress. In some instances, it can be customary to characterize natural light according to its Correlated Color Temperature (CCT) value, expressed in Kelvin (K). By convention, the CCT is defined by the CIE as "the temperature of the Planckian radiator whose perceived color most closely resembles that of a given stimulus at the same brightness and under specified viewing conditions" (CIE/IEC 17.4:1987, International Lighting Vocabulary). Lower CCT values correspond to "warmer" light. Hence, a day with a clear blue sky can begin at dawn with light in a warm CCT spectrum range, such as between 1500K and 3000K, then progress to about 5000K to 7500K at mid-day and return to the 1500K to 3000K range towards dusk. In horticultural or agricultural applications, the light conditions in a region of the world from which a cultivated produce originates or where this produce is known to thrive can be emulated (e.g., growing tomatoes using light conditions from a sunny day in June in Tuscany). In other examples, the lighting conditions may be adapted in view of observations or discoveries regarding optimal or enhanced lighting conditions for growing a given agricultural output, such as for example to follow the McCree Curve, which represents the average photosynthetic response of plants to light energy.

The present description generally relates to methods and systems for controlling horticultural light. Broadly described, the techniques herein disclosed include receiving or tracking integral indicators and/or external information representative of growth parameter(s) of the plants or crops as inputs, and then adjusting the horticultural light based on the received integral indicators and/or external information, using a feedback loop.

In the context of the current disclosure, the expression "integral indicators" will be used to refer to any parameters or measurable factors representative of the horticultural light, or that may be associated with the operation, characterization or control of the horticultural light. The integral indicators may be indicative of a target, *e.g.,* a value of a given parameter to be reached at the end of an illumination cycle, photoperiod, or sequence. Nonlimitative examples of integral indicators are:
- light integral to determine the photosynthetic photon flux (PPF) or the photosynthetic photon flux density (PPFD);
- light integral to determine the PPFD or the PFD associated with each wavelength;
- the CCT integral (measured in Kelvins);
- integral to determine the relative intensity (expressed in relative %) associated with each wavelength;
- the integral to determine the power consumption (expressed in kW) associated with each wavelength;
- the integral to determine the relative intensity (expressed in relative %) associated with each LED;
- the integral to determine the power consumption (expressed in kW) associated with each LED; and
- the power consumption integral (expressed in kW).

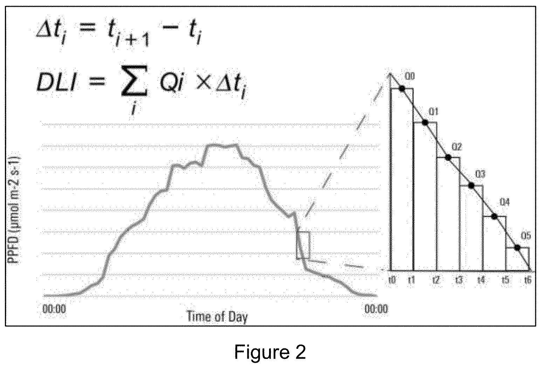

As it will be understood from the above examples, the integral indicators assign numbers to functions in a way that describes dimensions or parameters of interest that may arise by combining instantaneous values of a given dimension or parameter over a given period or sub-period. An example of an integral indicator being tracked is illustrated in Figure 2. In this Figure, the PPFD is plotted as a function of the time of day.

In the present description, the expression "external information" will be used to refer to data that may influence the horticultural light or its control, while not necessarily being representative of the horticultural light. Non limitative examples of external information are the weather, the grid rate schedule, data generated, produced or obtained with the sensors being used in the horticultural structure, the zone(s) of the horticultural structure, the power consumption of the lighting source(s), and data associated with plug-in API. In some embodiments, the external information may include growth parameters of the crops or plants. Examples of growth parameters include, but are not limited to absolute growth rate, relative growth rate, dimensions of the crops or plants or a portion thereof (e.g., roots, stems, leaves, buds, flowers, fruits, nodes, internodes and the like), and any other parameters related to the growth of the crops or plants.

### System for controlling horticultural light

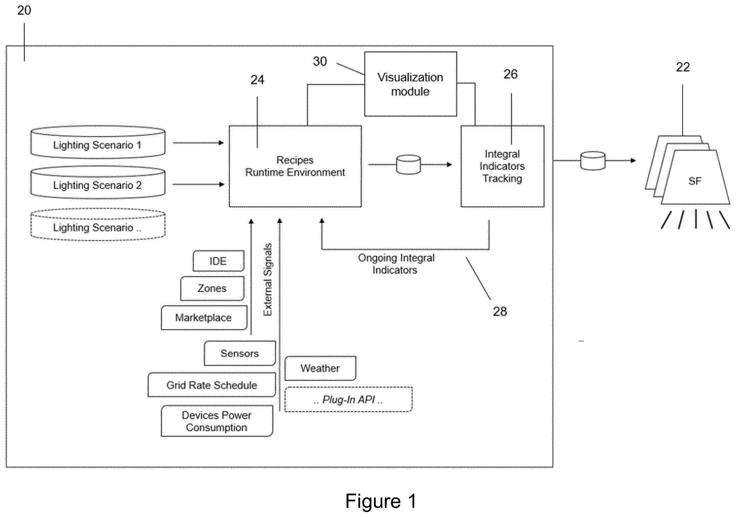

Referring to Figure 1, there is provided a system 20 for controlling horticultural light illuminating a crop or plant. As illustrated in Figure 1, the system 20 may be provided upstream of a horticultural light source 22, so that the output(s) of the system 20 can be received as input(s) by the horticultural light source 22. In some embodiments, the horticultural light source 22 may a lamp similar to the lighting system described in WO 2016119063, the content of which is incorporated herein by reference.

The system 20 broadly includes a recipe module 24 (sometimes referred to as a "recipes runtime environment"), a tracking module 26 and a feedback loop 28. It should be noted that the system 20, or at least some components thereof, may be integrated to the horticultural light source 22. In some embodiments, the recipe module 24, the tracking module 26 and the feedback loop 28 are integrated to the horticultural light source 22, such that the recipe module 24, the tracking module 26 and the feedback loop 28 are parts or components of the horticultural light source 22. In other embodiments, only one of the recipe module 24, the tracking module 26 and the feedback loop 28 is integrated to the horticultural light source 22. In other embodiments, two of the recipe module 24, the tracking module 26 and the feedback loop 28 are integrated to the horticultural lamp.

The recipe module 24 is configured to receive inputs. Different types of inputs may be provided to the recipe module 24. For example, the inputs may include signals representative of one or more lighting scenarios to be transmitted to the horticultural lighting apparatus 22. In some embodiments, the lighting scenarios (or recipes) may be files. The files may include, for example and without being limitative, control parameters of the horticultural lighting apparatus 22 and associated computer readable instructions for driving or controlling the horticultural lighting apparatus 22 according to the control parameters. The output of the recipe module 24 may be a batch or a stream of illumination instructions sent towards the horticultural lighting apparatus 22. The inputs may also include external signals representative of external information as defined above, and may, for example and without being limitative, include growth parameters of the crops or plants.

The external information may also include lamp identification and models active in one or more zone(s) of the horticultural structure, changes in zones associated with the natural lighting recipe being executed, environmental information obtained from sensors (e.g., temperature, humidity, lighting, CO₂), historical, actual and forecasted weather, integral indicators for the current photoperiod, grid rates schedule and grid rates changes notifications, and/or any combinations thereof.

In some embodiments, the lighting scenarios may be provided in a dataset including a plurality of sets or control parameters for the horticultural lighting apparatus 22. Each set of control parameters may be associated to an illumination state of the horticultural lighting apparatus 22. The dataset may be stored as a relational database and may have a database format commonly used in the art, such as Domino, SQL, SCSV, Office 365, or the like. The dataset may comprise textual information, numeral information, time information, date information, image information, and any combinations thereof. In the context of controlling horticultural light, the control parameters may include the different driving parameters of the horticultural light.

In some embodiments, the recipe module 24 may include a data storage device. Alternatively, the recipe module 24 may be operatively connected to a data storage device. One of the functions of the data storage device is to store a plurality of lighting scenarios. The recipe module 24 may be connected to the data storage device via any suitable communications channel. For example, the recipe module 24 and the data storage device may communicate over a network. In the present description, the term "network", synonyms and derivatives thereof are used to refer to any network, which includes publicly accessible networks of linked networks, possibly operated by various distinct parties, such as the Internet, private networks, personal area networks, local area networks, wide area networks, cable networks, satellite networks, cellular telephone networks, etc. or combination thereof.

The lighting scenario may either be preprogrammed ("preprogrammed lighting scenario") or generated using the recipe module 24 ("generated lighting scenario").

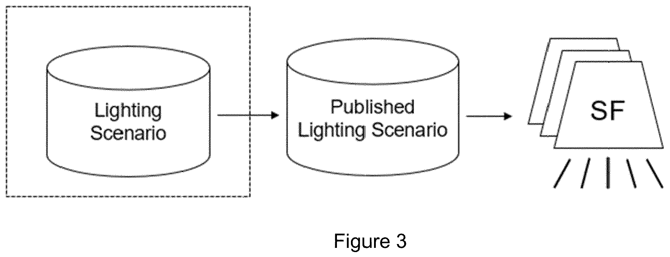

Figure 3 illustrates an embodiment involving a preprogrammed lighting scenario. The preprogrammed lighting scenario may be stored on the data storage device integrated or associated with the recipe module 24. In some embodiments, the data storage device may be operatively connected to the horticultural lighting apparatus 22 and configured to push the preprogrammed lighting scenarios towards the horticultural lighting apparatus 22.

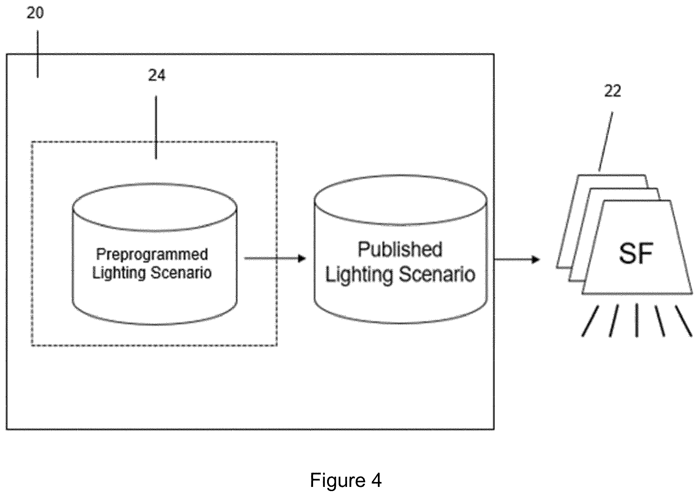

Figure 4 illustrates an embodiment involving a generated lighting scenario. In this embodiment, the recipe module 24 may be configured to generate the lighting scenarios. In such an embodiment, the recipe module 24 does not receive preprogrammed lighting scenarios (or files associated with the lighting scenarios) as an input. For example, the recipe module 24 may offer an environment to a user for programming the lighting scenarios (i.e., the recipe module 24 may be "programmed" by the user). In some embodiments, the recipe module 24 may receive user inputs to obtain or produce the generated lighting scenario (or portions thereof), as illustrated in Figure 4. The inputs may include, for example and without being limitative, code, computer-readable instructions or any other computer programming steps or sub-steps. In these embodiments, the recipe module 24 may be operable to receive user requests or external requests. These requests may be used to alter, modify and/or adjust the generated lighting scenarios. Of note, the requests may be manually provided, automatically provided or semiautomatically provided.

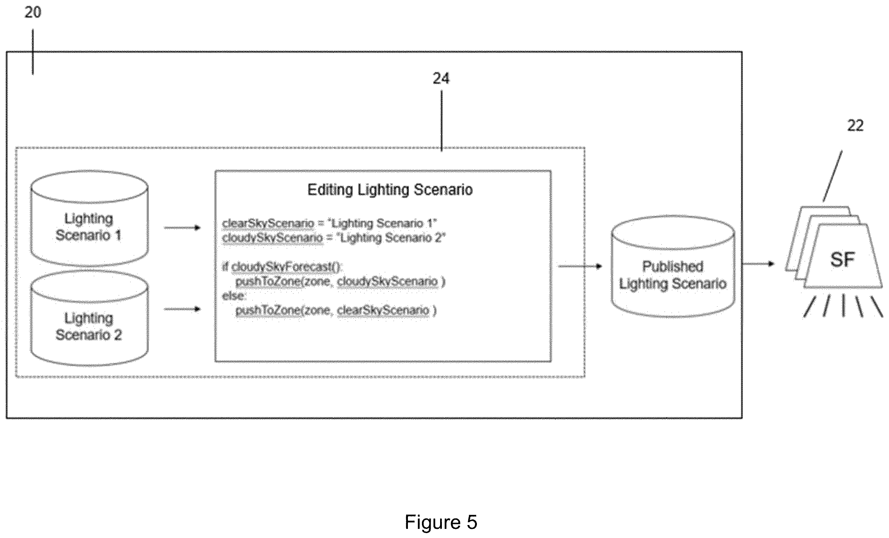

In some embodiments, the recipe module 24 may be configured to permit editing the lighting scenarios. It should be noted that both the preprogrammed lighting scenario and the generated lighting scenario may be saved, edited and/or exported. Of note, the lighting scenarios may be edited in real time or near real time, i.e., as the lighting scenario is transmitted to the horticultural lighting apparatus 22. An example of such an embodiment is depicted in Figure 5. Editing the lighting scenarios may involve one or more programming steps, such as, for example and without being limitative, logic programming.

In some embodiments, the recipe module 24 may include a visualization module 30 for visualizing a representation of the lighting scenarios stored in the data storage device or the generation of the lighting scenarios. The visualization module 30 may provide a visual representation of the lighting scenarios, and any other information relevant to the selection, programming, design and/or modification of a lighting scenario. The visual representation may be displayed on a display device, such as a screen. In some embodiments, the visual representation may be part of an interface through which the user to interact with the recipe module. It should be noted that, in some embodiments, the visual representation may be provided in real-time or near real-time.

Referring back to Figure 1, the tracking module 26 is operatively connected to the recipe module 24. The tracking module 26 may be connected to the recipe module 24 via any suitable communications channel. For example, the recipe module 24 and the tracking module 26 may communicate over a network. In some embodiments, the tracking module 26 and the recipe module 24 may be integrated into a single computer. In these embodiments, the recipe module 24 and the tracking module 26 collectively form a single integrated device.

As illustrated in Figure 1, the tracking module 26 is positioned downstream of the recipe module 24. The tracking module 26 is configured to track integral indicators and receive illumination instructions from the recipe module 24. The illumination instructions are representative of the lighting scenarios to be achieved by the horticultural lighting apparatus 22 and sent towards the horticultural lighting apparatus 22. For instance, the illumination instructions generally include control parameters for operating the horticultural light apparatus 22.

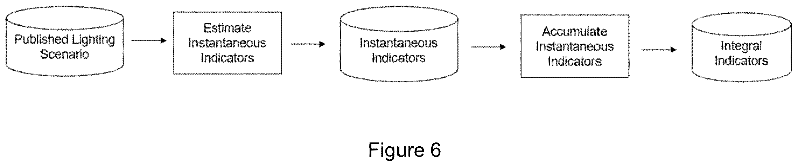

Now turning to Figure 6, there is illustrated a flowchart presenting how the tracking module 26 tracks the integral indicators, which may be referred as a "tracking process". Broadly described, the tracking process includes obtaining the integral indicators by collecting a plurality of successive instantaneous indicators. The tracking process also includes receiving the lighting scenario as an input and estimating the instantaneous indicators. The estimation may be based on a priori knowledge, computation, empirical data, theoretical model, calibration data and any combinations thereof. The instantaneous indicators (or the value representing a corresponding instantaneous indicator) may be stored on a data source or a memory. It should be noted that the instantaneous indicators may be temporarily or permanently saved. The integral indicators may then be determined, based on the collection or accumulation of the plurality of successive instantaneous indicators.

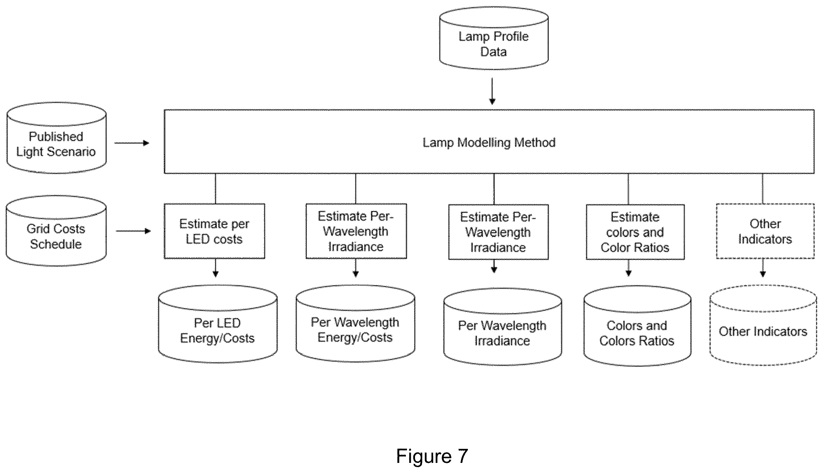

Figure 7 illustrates a nonlimitative example of the tracking process. In this example, the tracking module 26 takes a lighting scenario to be rendered by the horticultural lighting apparatus 22 as an input. The tracking module 26 is configured to determine or define a duration during which an instantaneous indicator will be calculated. In the example depicted in Figure 7, the instantaneous indicators are per LED energy and cost, per wavelength energy, cost and irradiance, and color ratios. It should be noted that any other indicators could be tracked, and that the instantaneous indicators in the example serves an illustrative purpose only. Once the duration has been determined, the tracking module 26 is configured to model or compute the instantaneous indicators associated with the lighting scenario. This may be achieved by using previously acquired lamp profile data, which may include, for example and without being limitative:
- Relation between LEDs modulation and power consumption;
- Relation between LEDs modulation and generated wavelengths; and
- Relation between LEDs modulation and generated irradiance.

The tracking process may include computing the instantaneous indicators and collecting (i.e., storing or accumulating) instantaneous indicators in a time series database. Alternatively, the instantaneous indicators may be collected as aggregates. Each step or sub-step of the tracking process may be repeated for every instantaneous indicator (e.g., SPD) in the lighting scenario. It should be noted that computing the instantaneous indicators may be achieved using lamp modelling method(s).

In some embodiments, the tracking module 26 tracks the integral indicators in real time or near real time. It should be noted that the tracking of the integral indicators and the reception of the illumination instructions by the tracking module 26 may be concurrent or sequential.

In some embodiments, the tracking module 26 may include a data storage device. Alternatively, the tracking module 26 may be operatively connected to a data storage device. The data storage device may be used to store integral indicators, for example, and without being limitative, past and/or ongoing integral indicators. The stored integral indicators may be logically associated with the lighting scenario or lighting instructions being transmitted to the horticultural lighting apparatus 22. This logical association may be provided in the form of a dataset, which may be useful to determine or predict which lighting scenarios could be used to reach a predetermined integral indicator in specific conditions. The dataset could also include other relevant information such as, for example and without being limitative, the predicted integral indicators, the measured integral indicators and the occurrence of random events (*e.g*., presence of clouds or similar events that may alter the illumination conditions of the crops or plants).

For example, if it is an objective to obtain a predetermined PPF before the end of a given photoperiod, the dataset associating past integral indicators with past lighting scenarios may be accessed, and the appropriate lighting scenarios allowing to obtain the predetermined PPF may be determined, through visual inspection and manual input(s), and/or computation. Of note, the computation may include arithmetical and/or non-arithmetical steps. The logical association between past integral indicators and past lighting scenarios may be used to determine how an ongoing lighting scenario should be edited or modified to reach a given integral indicator in a broad variety of contexts and situations.

In some embodiments, the recipe module 24 and the tracking module 26 may share a single data storage device, for example when the recipe module 24 and the tracking module 26 form a single integrated device.

The tracking module 26 may permit visualization of the past and/or present integral indicators. This may be achieved through the visualization module 30 of the recipe module 24 or a display associated to the tracking module 26. In some embodiments, the recipe module 24 and the tracking module 26 share a single visualization module 30.

The feedback loop 28 is operatively connected to the tracking module 26 and the recipe module 24. The feedback loop 28, the recipe module 24 and the tracking module 26, as well as their corresponding data storage device, if any, may communicate over a network. In some embodiments the information accessible to the recipe module 24, the tracking module 26 and the feedback loop 28 may be stored in a cloud or on cloud-based systems, devices, or apparatuses.

The feedback loop 28 is configured to feed ongoing integral indicators to the recipe module 24, *i.e*., some outputs of the tracking module 26 are routed back as inputs to the recipe module 24. After sending the ongoing integral indicators to the recipe module 24, the feedback loop 28 is configured to alter the illumination instructions being sent towards the horticultural lighting apparatus 22. Altering the illumination instructions results in adjusting the lighting scenario to be transmitted to the horticultural lighting apparatus 22. Adjusting the lighting scenario may allow reaching or approaching the integral indicators. Of note, the recipe module 24 may alter the illumination instructions based on the ongoing integral indicators being received from the feedback loop 28 This approach may ensure that the plants or crops receive light that matches their lighting requirements. Providing horticultural light that matches the plants or crops needs may be beneficial for several reasons. For example, and without being limitative, it may reduce or minimize energy waste, promote or accelerate growth and, in some circumstances, enhance the nutritional values of the plants (in the context of edible plants).

It should be noted that the feedback loop 28 may provide one or more signals to the recipe module 24. In some embodiments, each signal may be logically associated with a corresponding integral indicator. In other embodiments, the feedback loop 28 may provide a single signal to the recipe module 24, this single signal being representative of a plurality of integral indicators.

In some embodiments, the communication between recipe module 24, the tracking module 26, and the feedback loop 28, or the communication between the plurality of light sources 22, may be based on a light source identifier. In some embodiments, the light source identifier may include a serial number or an identifier number. Information about the horticultural lights source 22 or groups thereof may be used to dynamically set the communication protocol address in the installation and/or maintenance processes.

In some embodiments, an evolution of the recipe may be computed within the system, while being mounted on a fixture, a horticultural light source or a group of horticultural light sources. In some embodiments, the evolution may be computed on 15 millisecond base period. In some embodiments, the recipe or an evolution thereof may be compared to a procedural lighting program. Once programed, the fixture, horticultural light source or group of horticultural light sources can execute the procedural sequence in an autonomous manner (*i.e*., "independently").

The system 20 having been described may be implemented in computer programs executed on programmable computers. A programmable computer generally includes at least a processor and a data storage system that may include volatile and non-volatile memory and/or storage elements. The programmable computer may be a programmable logic unit, a mainframe computer, server, and personal computer, cloud-based program or system, laptop, personal data assistance, cellular telephone, smartphone, wearable device, tablet device, virtual reality devices, smart display devices, set-top box, video game console, portable video game devices, or virtual reality device. In some embodiments, the systems and methods may be provided as a plug-in. In some embodiments, one or more components of the system 20 having been described may be provided as a plug-in. The expression "plug-in" herein refers to a software component adding a predetermined feature or functionality to the system 20. Providing the different modules as plug-ins may be associated with some benefits, such as, for example and without being limitative, adaptability, modularity and flexibility.

Of note, the computer programs may be implemented in a high level procedural or object-oriented programming and/or scripting language to communicate with a computer system. The programs could alternatively be implemented in assembly or machine language, if desired. In these implementations, the language may be a compiled or interpreted language. The computer programs are generally stored on a storage media or a device readable by a general or special purpose programmable computer for configuring and operating the computer when the storage media or device is read by the computer to perform the procedures described herein. In some embodiments, the systems may be embedded within an operating system running on the programmable computer.

### Method for controlling horticultural light

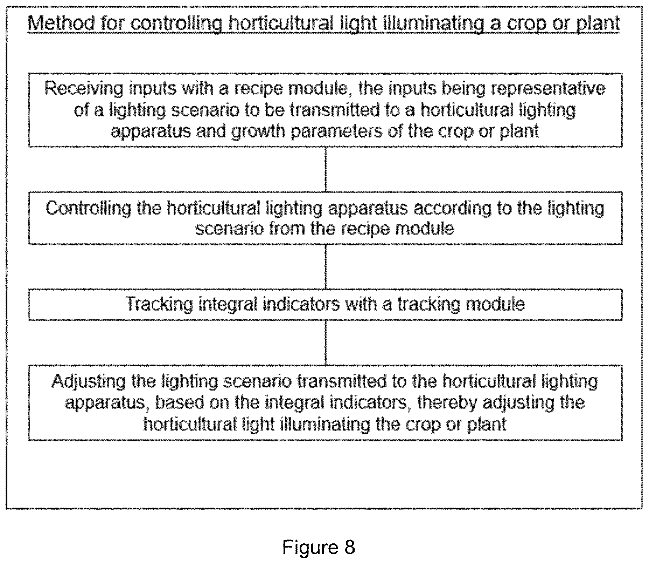

Now turning to Figure 8, there is illustrated a method for controlling horticultural light illuminating a crop or plant.

The method includes a first general step of receiving inputs. This step may be achieved with a recipe module. As indicated above, the inputs are representative of the lighting scenario to be transmitted to a horticultural lighting apparatus and/or external information, which may include growth parameters of the crop or plant. The method includes a second general step of controlling the horticultural light according to the lighting scenario from the recipe module. The method includes tracking integral indicators with a tracking module. Based on the integral indicators, the method includes adjusting the lighting scenario transmitted to the horticultural lighting apparatus, as it has been previously described.

In some embodiments, the method may include combining one or more lighting scenarios files with computer readable instructions, to produce a batch or a streaming of lighting scenario(s). In some embodiments, the method may be performed or carried out without requiring lighting scenarios as inputs.

In some embodiments, the method may be adapted to take one or more scenarios, recipes, recipe bundles, or any types of sequence that may be represented by illumination instructions as inputs.

In an embodiment, steps of the proposed method are implemented as software instructions and algorithms, stored in computer memory and executed by processors. It should be understood that computers are therefore required to implement to proposed system, and to execute the proposed method. In other words, the skilled reader will readily recognize that steps of various above-described methods can be performed by programmed computers. In view of the above, some embodiments are also intended to cover program storage devices, e.g., digital data storage media, which are machine or computer readable and encode machine-executable or computer-executable programs of instructions, wherein said instructions perform some or all of the steps of said above-described methods. The embodiments are also intended to cover computers programmed to perform said steps of the above-described methods.

In some embodiments, the signals transmission between the recipe module, the tracking module, the feedback loop and the horticultural lighting apparatus may rely on different protocols and methods. For example, and without being limitative, the protocols and methods may involve internet communications, streaming, cloud storage, private network, server(s), and/or any combinations thereof. In some embodiments, the signals being sent and/or received by the recipe module, the tracking module, the feedback loop and the horticultural lighting apparatus may be standardized or meet the requirements of any relevant norms. It should be noted that the expression "signals" also encompass the illumination instructions and the ongoing integral indicators.

In some embodiments, the present methods and systems may be used to control one or more horticultural lighting apparatuses. For instance, the proposed techniques may be used to control the horticultural light generated or produced by a plurality of lamps. Of note, the lamps may be simultaneously, sequentially or concurrently controlled, depending on the target applications.

In some embodiments, the tracking module can be used to track ongoing integral indicators, but also to compute past, present, and/or predicted integral indicators for a given lighting scenario. The integral indicators may be stored in the tracking module or in a separated memory and remain accessible to the tracking module for future reference.

In some embodiments, the methods and systems may include detecting of one or more signals representative of the horticultural environment. For example, the signals may be representative of changing climatic conditions in the horticultural environment.

The present techniques provide a computer-implemented framework for operating and controlling horticultural lighting apparatuses, based on a plurality of theoretical and/or empirical data. In some embodiments, the computer-implemented framework may be modular and may include a plurality of interchangeable modules. Each module may be associated with at least one functionality, such that the different modules may be combined, assembled or integrated to collectively achieve the functionalities of the systems and methods being herein described. In some embodiments, the modules, or at least some of the modules may be provided as plug-ins. It should be noted that the computer-implemented framework may be integrated into the horticultural light source 22, or any other similar lamps. As such, a portion or an entirety of the computer-implemented framework may be run or executed by the horticultural light source 22 or lamp. In some embodiments, the horticultural light source 22 may include a controller or a processor, and the present techniques may be implemented or executed by the controller or processor provided with the horticultural light source 22 or lamp.

In accordance with another aspect of the present description, there is provided a non-transitory computer readable storage medium having stored thereon computer executable instructions that, when executed by a processor, cause the processor to perform the methods that have been previously described. The non-transitory computer storage medium can be integrated to the systems or assemblies that have been described in the present description. The non-transitory computer storage medium could otherwise be operatively connected with the systems or assemblies. In the present description, the terms "computer readable storage medium" and "computer readable memory" are intended to refer to a non-transitory and tangible computer product that can store and communicate executable instructions for the implementation of various steps of the method disclosed herein. The computer readable memory can be any computer data storage device or assembly of such devices, including random-access memory (RAM), dynamic RAM, read-only memory (ROM), magnetic storage devices such as hard disk drives, solid state drives, floppy disks and magnetic tape, optical storage devices such as compact discs (CDs or CDROMs), digital video discs (DVD) and Blu-Ray^{™} discs; flash drive memory, and/or other non-transitory memory technologies. A plurality of such storage devices may be provided, as can be understood by those skilled in the art. The computer readable memory may be associated with, coupled to, or included in a computer or processor configured to execute instructions contained in a computer program stored in the computer readable memory and relating to various functions associated with the computer.

### Examples

Now that different embodiments of the technology have been described, some nonlimitative examples illustrating potential implementations of the techniques will be presented. It should be noted that these examples serve an illustrative purpose only and should therefore not be considered limitative.

According to a first example, an operator may want to implement a recipe that produces or generates a horticultural light having a spectrum optimized for a specific crop or plant, while achieving optimal power consumption by the lamps pool. The lamps pool herein refers to a plurality of horticultural lighting apparatuses that may be provided in the same horticultural structure.

For example, it may be known that the specific crop or plant may better respond under given red to far red, red to blue and blue to green ratios (i.e., color ratios) ranges and may require a certain amount of daily light for optimal growth. These indicators will be known as the target indicators. It should be noted that the ratios ranges may be known a priori, determined, calculated, or based on calibration data.

It is also known that the lamp electricity consumption may vary depending on the spectral power distribution (SPD) reproduced by the LEDs included in the lamp (i.e., the horticultural lighting apparatus) and/or controllers, and that the lamp electricity consumption may change at any moment, as the spectral power distribution pattern changes during a photoperiod.

The operator could implement, in the form of scenario files and computer readable instructions, a light recipe (or a lighting scenario) designed to receive the integral indicators of the various color ratios and daily light, and, using the lamp spectral power distribution (SPD) profile, determine anticipated integral values for a given period. The operator could then implement an algorithm performing real-time adjustments to the generated light recipe or scenario to achieve optimal use of the electricity by the device, while attempting to stay as close as possible to the target integral indicators.

According to a second example, an operator may want to optimize the horticultural lighting to compensate for cloud cover (i.e., the portion or fraction of the sky being obscured by clouds in a given location) or other similar events that may affect the lighting conditions of the crops or plants. This implementation may be useful in a context wherein the system (*i.e*., the horticultural lighting apparatus) is associated with lighting equipment providing supplemental lighting, as it is sometimes the case in a greenhouse.

It is known that a given crop or plant generally better responds under known color ratios ranges and requires a certain amount of daily light for optimal growth. These indicators will be known as the target indicators.

It is also known that very short-term weather forecasts signals are generally available and may be fed to the system having been described. The forecast data signals may include, for example and without being limitative, cloud density and cloud level forecasts on an hourly basis and may be available for the area where the greenhouse is located.

The operator could implement a light recipe or scenario designed to receive the cloud forecasts signals for the next hour and select the proper reference scenario to generate the lighting to the lamp pool. The light recipe or scenario may be provided in the form of multiple scenario files and corresponding computer readable instructions, each having different light intensities and CCT. In the decision process, the algorithm may use the feedback associated with the integral indicators, which may be useful for fine-tuning decisions, such that the horticultural lighting apparatus produces light having a profile allowing to match or at least approach the target integral indicators.

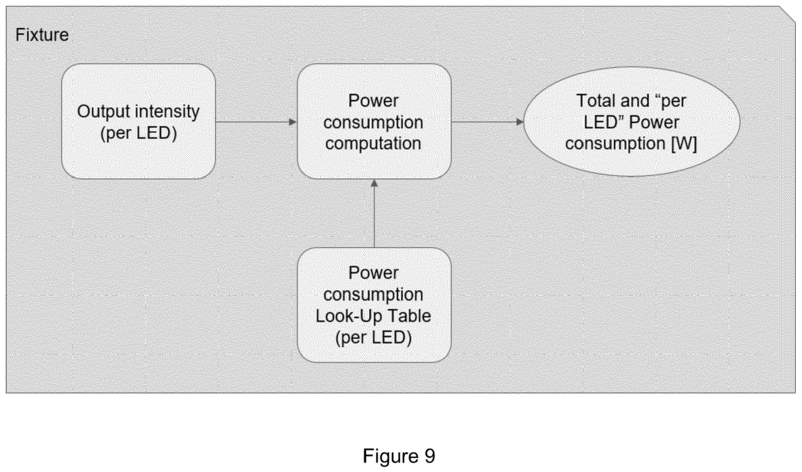

Now turning to Figures 9 to 17, nonlimitative implementations of the present techniques will now be described.

With reference to Figure 9, there is illustrated a schematic representation of the system for controlling horticultural light (labeled as a "fixture"). In this implementation, data representative of output intensity of each LED and power consumption look-up table of each LED can be obtained, which may be used for computing the power consumption of the system, using module(s) having been previously described. It is therefore possible to estimate a total power consumption and/or a power consumption per LED.

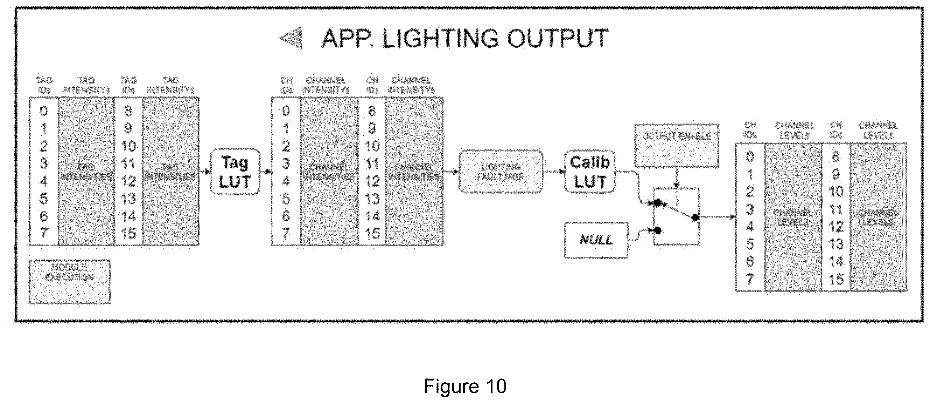

Now turning to Figure 10, the present techniques allow determining relative intensity associated with each LED. The intensity of each a LED can be determined at any time (as long as the system or fixture is powered). Typically, the system is configured to obtain information according to three type of intensity-related information, namely: an intensity in the "domain" point of view (labeled as "tag intensity"), which is a high-level information; an intensity in the "conceptual" point of view (labeled as "channel intensity"), which is a mid-level information; and an intensity in the "fundamental" point of view (labeled as "channel level"), which is low-level information.

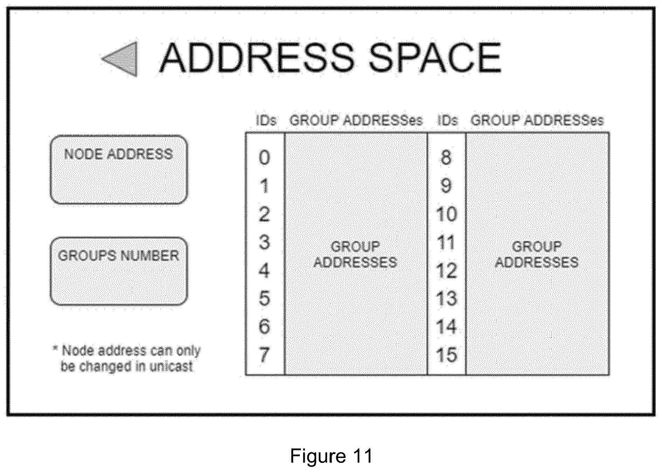

With reference to Figure 11, there is illustrated a representation of the address space. In some embodiments, the system may be subscribed to 16 groups, for example in context wherein 1024 groups may be defined in a given horticultural zone). Of note, the system will be reactive to all request targeting any one of the groups to which it is subscribed. The request can use combinatorial operand to target a complex set of groups at once, which may be useful in scenarios in which multiple different system of fixture models are provided in a same horticultural zone.

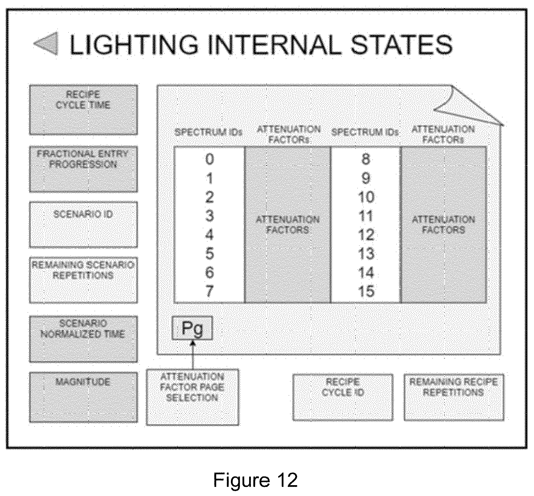

Now turning to Figure 12, there is illustrated a representation of the lighting internal states, which may include, for example and without being limitative, recipe cycle time, fractional entry progression, scenario identification, remaining scenario repetitions, scenario normalized time, magnitude, attenuation factor, recipe cycle identification, and many others. It should be noted that an actual or current state of the lighting output may be computed in real time or near real time. Figure 12 shows that the internal states can be computed by the system fixture and become available in run-time for monitoring and/or debugging purposes. In addition, the evolution of the recipe is computed within the system or fixture (*e.g*., on a 15 millisecond period). This approach is similar to procedural lighting program sent to the apparatus. Once programed, the system fixture will execute that procedural sequence in an autonomous manner.

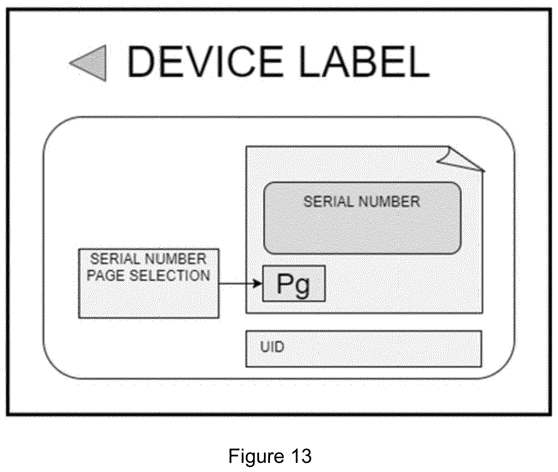

With reference to Figure 13, there is shown a possible implementation of a device label module, which can be used to identify the system from its serial number or identification number, as previously described. In some embodiments, each system or fixture has a unique Serial Number and UID. In some embodiments, this information is available from the Device Label module, and may be used to uniquely identify each system fixture. In some embodiments, this information may be combined with other mechanism(s) to set the communication protocol address dynamically in the installation/maintenance processes.

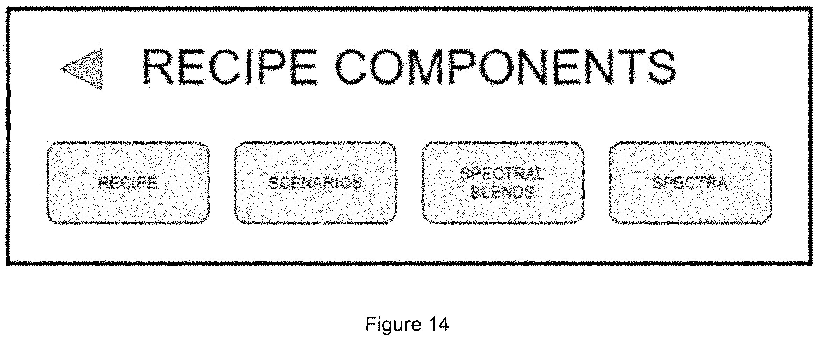

Now turning to Figure 14, there is illustrated a visual representation of some components that may be collectively operated to define a recipe. In some embodiments, the components or modules presented in Figure 14 may be integrated to the system or a portion thereof. In some embodiments, these components can be updated any time (in run-time or not) from an external device. In some embodiments, these components can be used in run-time by the system or fixture to compute the actual lighting output state. In some embodiments, these components can be saved in the non-volatile embedded memory of the fixture at any time. In some embodiments, these components can be loaded from the non-volatile memory at boot time

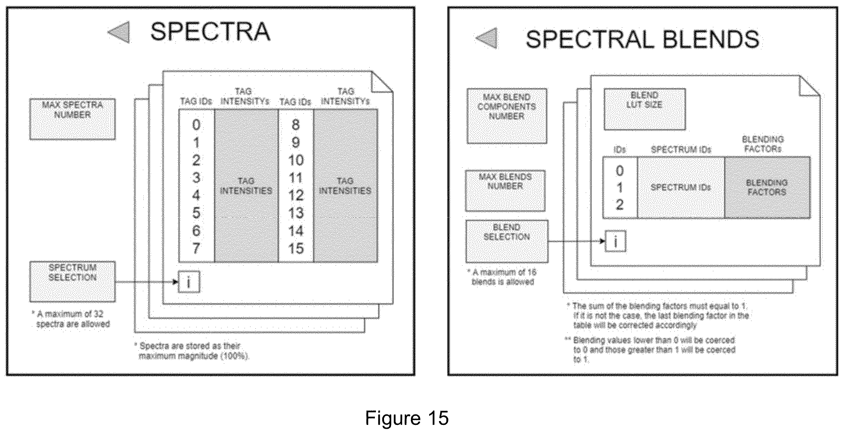

With reference to Figure 15, the system may include a spectrum selection module, which may be configured to select or determine a spectrum to be achieved by the system, which are associated with illumination states of the horticultural light sources. In some embodiments, the system may further include a spectral blend module, which may be configured to blend preselected or predetermined spectra together, in order to achieve an intended or desired spectrum to be achieved by the system.

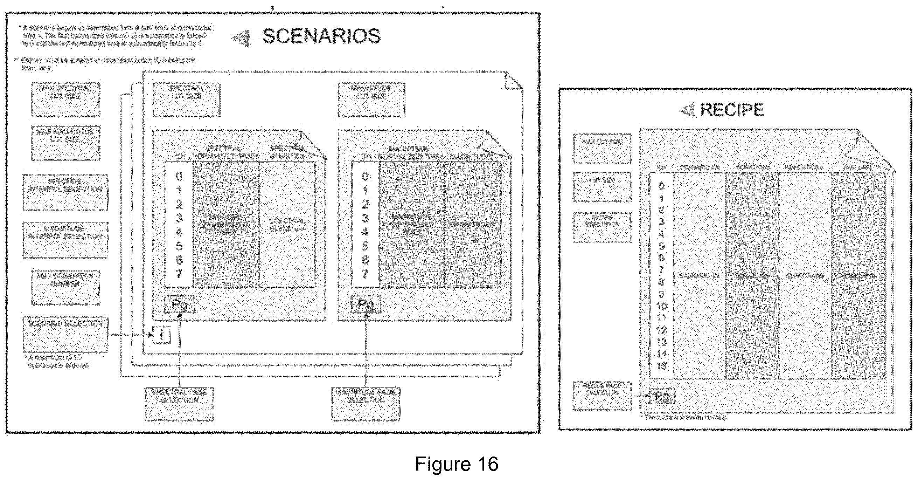

Figure 16 shows an implementation of a visual representation of a scenario module and a recipe module.

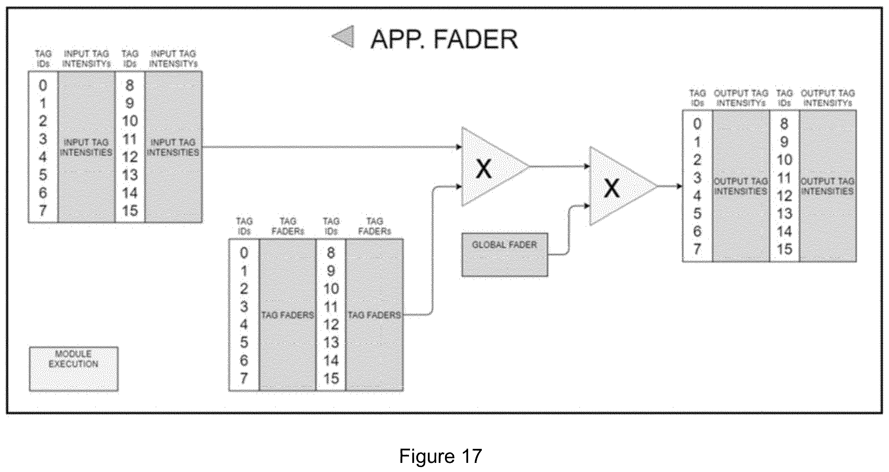

With reference to Figure 17, there is illustrated a fader module that can be used to alter, modify or adjust the instantaneous output spectrum of the system. Of note, two levels of granularity may be controlled, namely the global output spectrum and the individual LED output spectrum. The fader module is configured to allow an attenuation of the output intensity associated with at least one LED, and, in some embodiments, all the LEDs. The operation of the fader module may be conceptually described as a simple multiply operator.

Several alternative embodiments and examples have been described and illustrated herein. The embodiments described above are intended to be exemplary only. A person skilled in the art would appreciate the features of the individual embodiments, and the possible combinations and variations of the components. A person skilled in the art would further appreciate that any of the embodiments could be provided in any combination with the other embodiments disclosed herein. The present examples and embodiments, therefore, are to be considered in all respects as illustrative and not restrictive. Accordingly, while specific embodiments have been illustrated and described, numerous modifications come to mind without significantly departing from the present disclosure.

## Claims

1. A method for controlling horticultural light illuminating a crop or plant, the method comprising:
receiving inputs with a recipe module, the inputs being representative of a lighting scenario to be transmitted to a horticultural lighting apparatus and growth parameters of the crop or plant;
controlling the horticultural lighting apparatus according to the lighting scenario from the recipe module;
tracking integral indicators with a tracking module; and
adjusting the lighting scenario transmitted to the horticultural lighting apparatus, based on the integral indicators, thereby adjusting the horticultural light illuminating the crop or plant.

2. The method of claim 1, wherein the integral indicators are based on theoretical data, empirical data, or a combination thereof.

3. The method of claim 1 or 2, wherein the integral indicators comprise data representative of at least one of : an integral associated with a photosynthetic photon flux, an integral associated with a photosynthetic photon flux density, an integral associated with a correlated color temperature, an integral associated with a relative intensity for each wavelength, an integral associated with a power consumption for each wavelength, an integral associated with a relative intensity for each light-emitting diode, an integral associated with a power consumption for each light-emitting diode and an integral associated with a global power consumption integral.

4. The method of any one of claims 1 to 3, further comprising tracking external information, said adjusting the horticultural light being further based on said external information, said external information comprises at least one of: weather information, power consumption information and grid rate schedule.

5. The method of any one of claims 1 to 4, wherein said growth parameters comprises at least one of: absolute growth rate, relative growth rate, dimensions of at least a portion of the crops or plants.

6. The method of any one of claims 1 to 5, wherein adjusting the lighting scenario transmitted to the horticultural lighting apparatus comprises adjusting parameters controlling the horticultural lighting apparatus.

7. The method of any one of claims 1 to 5, wherein the horticultural light apparatus comprises a plurality of light-emitting diodes, and wherein said adjusting the lighting scenario transmitted to the horticultural lighting apparatus comprises adjusting parameters controlling said plurality of light-emitting diodes.

8. The method of any one of claims 1 to 7, further comprising outputting a visual representation of the lighting scenario, past integral indicators, present integral indicators and/or predicted integral indicators.

9. The method of any one of claims 1 to 8, wherein said tracking the integral indicators comprises obtaining a plurality of successive instantaneous indicators, said obtaining the plurality of successive instantaneous indicators comprises: one of measuring the instantaneous indicators and estimating the instantaneous indicators.

10. The method of any one of claims 1 to 9, wherein said tracking integral indicators is carried out in real time or near real time.

11. The method of any one of claims 1 to 10, further comprising detecting one or more signals representative of a horticultural environment.

12. A system for controlling horticultural light illuminating a crop or plant, the system including:
a recipe module configured to receive inputs, the inputs being representative of a lighting scenario to be transmitted to a horticultural lighting apparatus and growth parameters of the crop or plant; and
a tracking module configured to track integral indicators, the tracking module being operatively connected to the recipe module and receiving therefrom illumination instructions; and
a feedback loop operatively connected to the tracking module and the recipe module, the feedback loop being configured to feed ongoing integral indicators to the recipe module, and, in response thereto, alter the illumination instructions and thereby adjust the lighting scenario to be transmitted to the horticultural lighting apparatus.

13. The system of claim 12, wherein at least one of: the recipe module, the tracking module and the feedback loop is integrated to the horticultural light source.

14. The system of claim 12 or 13, wherein the recipe module comprises a visualization module for:
visualizing a representation of the lighting scenario; and/or
visualizing a representation of past integral indicators, present integral indicators and/or predicted integral indicators.

15. The system of any one of claims 12 to 14, wherein the horticultural lighting apparatus comprises a plurality of light-emitting diodes.
